# EUROPÄISCHE PATENTSCHRIFT

(11) **EP 2 505 859 B1**
(45) Veröffentlichungstag und Bekanntmachung des Hinweises auf die Patenterteilung: **23.09.2015**
(21) Anmeldenummer: 12153269.1
(22) Anmeldetag: 31.01.2012
(51) Int. Cl.: F16C 19/10, F16C 33/38, F16C 33/40, F16C 33/58

(54) **Axiallagerung**
Axial bearing
Support axial

(30) Priorität: 31.03.2011 DE 102011006600
(43) Veröffentlichungstag der Anmeldung: 03.10.2012
(73) Patentinhaber: Schaeffler Technologies AG & Co. KG, 91074 Herzogenaurach (DE)
(72) Erfinder: Smetana, Tomas, 91074 Herzogenaurach (DE)

(56) Entgegenhaltungen:
- EP-A2- 0 234 469
- JP-A- 2003 063 288
- JP-A- 2006 200 677
- US-A- 4 045 100

## Beschreibung

### Gebiet der Erfindung

Die Erfindung betrifft eine Axiallagerung für ein vorzugsweise ring- oder scheibenförmiges Bauteil, umfassend ein erstes an einer Seite des Bauteils angeordnetes Wälzlager und ein zweites an der gegenüberliegenden Seite des Bauteils angeordnetes Wälzlager.

### Hintergrund der Erfindung

Anwendungsgebiete für derartige Axiallagerungen sind z. B. elektromechanische Aktuatoren mit einem Aktuatorgetriebe, durch das ein Ritzel angetrieben wird. Ein Schaltvorgang des Aktuatorgetriebes wird durch eine Drehung des Ritzels ausgelöst, das mit einem Zahnrad oder einem Verzahnungssegment in Eingriff ist. Herkömmliche Lagerungen weisen für diesen Zweck zumeist eine Kombination von zwei Axiallagern, zwischen denen das Verzahnungssegment aufgenommen ist und eine radiale Gleitbuchse auf. Problematisch ist dabei jedoch, dass die radiale Gleitbuchse einen zusätzlichen radialen Bauraum benötigt, der nur eingeschränkt verfügbar ist. Probleme entstehen auch dadurch, dass die Reibungsverhältnisse an den Gleitflächen undefiniert sind, so dass nicht für die gesamte Lebensdauer garantiert werden kann, dass bei dem Aktuator keine Selbsthemmung auftritt.

Ein Beispiel für eine herkömmliche Axiallagerung mit Kugellagern und Nadellagern ist aus der DE 10 2007 009 964 A1 bekannt. Dort wird eine hydraulisch betätigte Doppelkupplung vorgeschlagen, die axial sowohl durch als Kugeln als auch durch als Zylinder (Nadeln) ausgebildete Wälzkörper gelagert ist. Herkömmliche Axiallagerungen weisen das Problem auf, dass deren axialer Bauraumbedarf hoch ist. Sofern zwei radial versetzt angeordnete Wälzlager verwendet werden, ergeben sich hohe Werkzeugkosten, da zwei verschiedene Käfige erforderlich sind.

Der Erfindung liegt daher die Aufgabe zugrunde, eine Axiallagerung anzugeben, die einen geringen axialen Bauraumbedarf aufweist und gleichzeitig kostengünstig herstellbar ist.

### Zusammenfassung der Erfindung

Zur Lösung dieser Aufgabe ist bei einer Axiallagerung der eingangs genannten Art erfindungsgemäß vorgesehen, dass beide Wälzlager unterschiedliche Teilkreise und einen identischen, mit Öffnungen für beide Teilkreise versehenen Käfig aufweisen.

Die Erfindung beruht auf der Erkenntnis, dass eine bauraumoptimierte Axiallagerung geschaffen werden kann, indem für beide Wälzlager der gleiche Käfig benutzt wird. Dieser Käfig weist Öffnungen für zwei unterschiedliche Teilkreise auf, die in Radialrichtung zueinander versetzt sind. Der Käfig weist somit einen äußeren (größeren) Teilkreis und einen inneren (kleineren) Teilkreis auf. Bei der erfindungsgemäßen Axiallagerung befinden sich die Wälzkörper auf einer Seite des Bauteils auf dem äußeren Teilkreis, auf der anderen Seite des Bauteils befinden sich die Wälzkörper auf dem inneren Teilkreis. Somit kann die Lagerung mit lediglich einem Käfig realisiert werden, wodurch zusätzliche Werkzeugkosten entfallen.

Bei der erfindungsgemäßen Axiallagerung kann es vorgesehen sein, dass die Öffnungen für den ersten und den zweiten Teilkreis in Umfangsrichtung versetzt angeordnet sind. Durch diese versetzte Anordnung können die Öffnungen beider Teilkreise in dem Käfig angeordnet sein, auch wenn die Teilkreise sich nur geringfügig unterscheiden. Beispielsweise kann eine Öffnung des inneren Teilkreises zwischen zwei Öffnungen des äußeren Teilkreises angeordnet sein, wodurch sich eine gute Ausnutzung des zur Verfügung stehenden Raums ergibt. Dementsprechend können die Öffnungen der beiden Teilkreise sowohl in Umfangsrichtung als auch radial zueinander versetzt angeordnet sein.

Eine noch bessere Funktion der erfindungsgemäßen Axiallagerung ergibt sich, wenn das Bauteil Anlageflächen für Wälzkörper des ersten Wälzlagers und des zweiten Wälzlagers aufweist, zwischen denen das Bauteil gekröpft ausgebildet ist. Durch die Kröpfung des Bauteils zwischen den Anlageflächen für Wälzkörper des ersten Wälzlagers (erster Teilkreis) und des zweiten Wälzlagers (zweiter Teilkreis) wird der Bauraumbedarf in Axialrichtung beträchtlich verringert, die gesamte Axiallagerung kann somit schmaler als bei Verwendung von zwei herkömmlichen Wälzlagern mit identischen Käfigen realisiert werden.

Eine besonders zuverlässige Funktion der erfindungsgemäßen Axiallagerung ergibt sich, wenn die Anlageflächen des Bauteils als an die Kontur der Wälzkörper angepasste Mulden ausgebildet sind. Durch diese Maßnahme wird eine exakt definierte Reibung im Aktuator erzielt und eine unerwünschte Selbsthemmung vermieden.

Im Hinblick auf die Käfige der erfindungsgemäßen Axiallagerung wird es bevorzugt, dass diese aus einem Kunststoffmaterial bestehen, derartige Käfige sind kostengünstig herstellbar. Im vorliegenden Fall ist für beide Wälzlager lediglich ein Käfig erforderlich, wobei auf einer Seite des Bauteils lediglich die dem ersten Teilkreis zugeordneten Öffnungen und auf der anderen Seite des Bauteils lediglich die dem zweiten Teilkreis zugeordneten Öffnungen mit Wälzkörpern bestückt sind. Im Rahmen der Erfindung kann es vorgesehen sein, dass die Wälzkörper der erfindungsgemäßen Axiallagerung als Kugeln oder Zylinder ausgebildet sind.

Die erfindungsgemäße Axiallagerung eignet sich besonders gut zur Verwendung bei einem Aktuator, dementsprechend kann das Bauteil Bestandteil eines Aktuators sein, insbesondere kann das Bauteil Bestandteil eines Getriebes sein, beispielsweise kann es als Zahnrad oder Verzahnungssegment eines elektrisch schaltbaren Getriebes ausgebildet sein.

Darüber hinaus eignet sich die erfindungsgemäße Axiallagerung auch für Axialversteller, dementsprechend kann das Bauteil Bestandteil eines Axialverstellers sein. Derartige Axialversteller eignen sich zur Verstellung einer Welle, insbesondere einer Nockenwelle einer Brennkraftmaschine.

### Kurze Beschreibung der Zeichnung

Nachfolgend wird ein Ausführungsbeispiel der Erfindung unter Bezugnahme auf die Zeichnungen erläutert. Die Zeichnungen sind schematische Darstellungen und zeigen:
- Figur 1: eine geschnittene Seitenansicht einer erfindungsgemäßen Axiallagerung; und
- Figur 2: einen Ausschnitt eines Käfigs der Axiallagerung von Figur 1.

### Ausführliche Beschreibung der Zeichnung

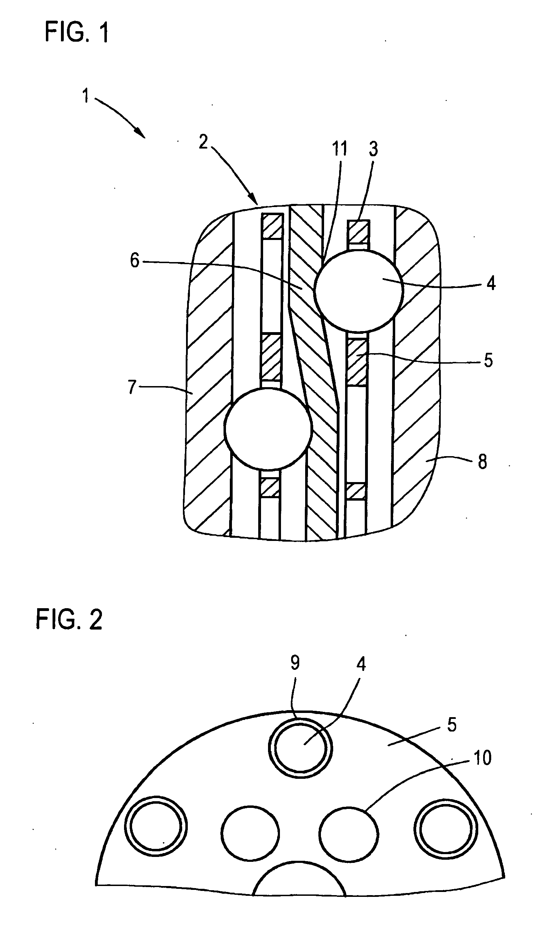

Die in Figur 1 in einer geschnittenen Seitenansicht gezeigte Axiallagerung 1 umfasst zwei Wälzlager 2, 3 die jeweils als Kugeln ausgebildete Wälzkörper 4 aufweisen, die in Käfigen 5 aufgenommen sind. Der Käfig 5 ist aus einem Kunststoffmaterial hergestellt.

Die Wälzlager 2, 3 sind parallel zueinander angeordnet, zwischen ihnen befindet sich ein Bauteil, das in dem dargestellten Ausführungsbeispiel als Verzahnungssegment 6 ausgebildet ist. Das Verzahnungssegment 6 ist Bestandteil eines Aktuators einer Elektroachse für ein Fahrzeug. Diese Elektroachse umfasst ein Getriebe, durch eine Betätigung des Aktuators wird zwischen zwei Getriebestufen geschaltet. Dementsprechend wird das Verzahnungssegment 6 beim Schaltvorgang axial verschoben.

Die Wälzkörper 4 der beiden Wälzlager 2, 3 stützen sich außen jeweils an Laufbahnen 7, 8 ab. Wie am besten in der Seitenansicht von Figur 2 zu sehen ist, weist der Käfig 5 erste Öffnungen 9 für einen ersten (äußeren) Teilkreis und zweite Öffnungen 10 für einen zweiten (inneren) Teilkreis auf. Die Öffnungen 9 des ersten Teilkreises sind gegenüber den Öffnungen 10 des zweiten Teilkreises radial nach außen versetzt, zusätzlich sind die Öffnungen 9 des ersten Teilkreises und die Öffnungen 10 des zweiten Teilkreises auch in Umfangsrichtung zueinander versetzt in dem Käfig 5 angeordnet. Da der Käfig 5 sowohl Öffnungen 9 für den ersten Teilkreis als auch Öffnungen 10 für den zweiten Teilkreis aufweist, ist derselbe Käfig 5 Bestandteil beider Wälzlager 2, 3. Obwohl die Wälzlager 2, 3 unterschiedliche Teilkreise aufweisen, kann der gleiche Käfig 5 verwendet werden, wodurch Werkzeugkosten eingespart werden. Wenn der Käfig 5 für das Wälzlager 2 verwendet wird, sind lediglich die Öffnungen 10 des zweiten Teilkreises mit Wälzkörpern 4 besetzt. Wenn der Käfig 5 für das Wälzlager 3 verwendet wird, sind lediglich die Öffnungen 9 des ersten (äußeren) Teilkreises mit Wälzkörpern 4 versehen, dieser Zustand ist in Figur 2 dargestellt.

In Figur 1 erkennt man, dass das Verzahnungssegment 6 als Mulden 11 ausgebildete Anlageflächen für die Wälzkörper 4 aufweist. In Radialrichtung ist das Verzahnungssegment 6 zweifach in entgegengesetzte Richtungen gekröpft, wodurch sich der axiale Bauraumbedarf reduziert. Die Axiallagerung 1 ist somit wesentlich schmaler im Vergleich zu einer Axiallagerung, die zwei Wälzlager mit identischem Teilkreis umfasst. Bei der Axiallagerung 1 kann auf ein Radiallagerelement, beispielsweise eine radiale Gleitbuchse, verzichtet werden, da gegebenenfalls auftretende geringe Radialkräfte auch von den Wälzlagern 2, 3 aufgenommen werden.

### Bezugszahlenliste

- 1: Axiallagerung
- 2: Wälzlager
- 3: Wälzlager
- 4: Wälzkörper
- 5: Käfig
- 6: Verzahnungssegment
- 7: Laufbahn
- 8: Laufbahn
- 9: Öffnung
- 10: Öffnung
- 11: Mulde

## Patentansprüche

1. Axiallagerung für ein vorzugsweise ring- oder scheibenförmiges Bauteil, umfassend ein erstes an einer Seite des Bauteils angeordnetes Wälzlager mit Wälzkörpern und ein zweites an der gegenüberliegenden Seite des Bauteils angeordnetes Wälzlager mit weiteren Wälzkörpern, **dadurch gekennzeichnet, dass** sich die Wälzkörper beider Wälzlager (2, 3) auf unterschiedlichen Teilkreisen befinden und dass die Wälzlager (2, 3) einen identischen mit Öffnungen (9, 10) für beide Teilkreise versehenen Käfig (5) aufweisen.

2. Axiallagerung nach Anspruch 1, **dadurch gekennzeichnet, dass** die Öffnungen (9, 10) für den ersten und den zweiten Teilkreis in Umfangsrichtung versetzt angeordnet sind.

3. Axiallagerung nach Anspruch 1 oder 2, **dadurch gekennzeichnet, dass** das Bauteil Anlageflächen für Wälzkörper (4) des ersten Wälzlagers (2) und des zweiten Wälzlagers (3) aufweist, zwischen denen es gekröpft ausgebildet ist.

4. Axiallagerung nach einem der vorangehenden Ansprüche, **dadurch gekennzeichnet, dass** die Anlageflächen als an die Kontur der Wälzkörper (4) angepasste Mulden (11) ausgebildet sind.

5. Axiallagerung nach einem der vorangehenden Ansprüche, **dadurch gekennzeichnet, dass** der Käfig (5) aus einem Kunststoffmaterial besteht.

6. Axiallagerung nach einem der vorangehenden Ansprüche, **dadurch gekennzeichnet, dass** die Wälzkörper (4) als Kugeln oder Zylinder ausgebildet sind.

7. Axiallagerung nach einem der vorangehenden Ansprüche, **dadurch gekennzeichnet, dass** das Bauteil Bestandteil eines Aktuators, insbesondere für ein Getriebe, ist.

8. Axiallagerung nach einem der Ansprüche 1 bis 6, **dadurch gekennzeichnet, dass** das Bauteil Bestandteil eines Axialverstellers ist.

## Claims

1. Axial bearing arrangement for a preferably ringshaped or disc-shaped component, the axial bearing arrangement comprising a first rolling bearing, which is arranged on one side of the component and which has rolling bodies, and a second rolling bearing, which is arranged on the opposite side of the component and which has further rolling bodies, **characterized in that** the rolling bodies of the two rolling bearings (2, 3) are situated on different pitch circles, and **in that** the rolling bearings (2, 3) have an identical cage (5) with openings (9, 10) for both pitch circles.

2. Axial bearing arrangement according to Claim 1, **characterized in that** the openings (9, 10) for the first pitch circle and for the second pitch circle are arranged with an offset in a circumferential direction.

3. Axial bearing arrangement according to Claim 1 or 2, **characterized in that** the component has contact surfaces for rolling bodies (4) of the first rolling bearing (2) and of the second rolling bearing (3), between which contact surfaces said component is of cranked form.

4. Axial bearing arrangement according to one of the preceding claims, **characterized in that** the contact surfaces are in the form of depressions (11) which are adapted to the contour of the rolling bodies (4).

5. Axial bearing arrangement according to one of the preceding claims, **characterized in that** the cage (5) is composed of a plastics material.

6. Axial bearing arrangement according to one of the preceding claims, **characterized in that** the rolling bodies (4) are in the form of balls or cylinders.

7. Axial bearing arrangement according to one of the preceding claims, **characterized in that** the component is a constituent part of an actuator, in particular for a gearbox.

8. Axial bearing arrangement according to one of Claims 1 to 6, **characterized in that** the component is a constituent part of an axial adjuster.

## Revendications

1. Support axial pour un composant de préférence en forme d'anneau ou de disque, comprenant un premier palier à roulement avec des corps de roulement disposé sur un côté du composant et un deuxième palier à roulement avec d'autres corps de roulement disposé sur le côté opposé du composant, **caractérisé en ce que** les corps de roulement des deux paliers à roulement (2, 3) se trouvent sur des cercles primitifs différents et **en ce que** les paliers à roulement (2, 3) présentent une cage (5) identique dotée d'ouvertures (9, 10) pour les deux cercles primitifs.

2. Support axial selon la revendication 1, **caractérisé en ce que** les ouvertures (9, 10) pour le premier et le deuxième cercle primitif sont disposées de façon décalée en direction périphérique.

3. Support axial selon la revendication 1 ou 2, **caractérisé en ce que** le composant présente des faces d'appui pour des corps de roulement (4) du premier palier à roulement (2) et du deuxième palier à roulement (3), entre lesquelles il est contrecoudé.

4. Support axial selon l'une quelconque des revendications précédentes, **caractérisé en ce que** les faces d'appui sont réalisées sous forme de cuvettes (11) adaptées au contour des corps de roulement (4).

5. Support axial selon l'une quelconque des revendications précédentes, **caractérisé en ce que** la cage (5) est constituée d'un matériau de matière plastique.

6. Support axial selon l'une quelconque des revendications précédentes, **caractérisé en ce que** les corps de roulement (4) sont réalisés sous forme de billes ou de cylindres.

7. Support axial selon l'une quelconque des revendications précédentes, **caractérisé en ce que** le composant fait partie d'un actionneur, en particulier pour une boîte de vitesses.

8. Support axial selon l'une quelconque des revendications 1 à 6, **caractérisé en ce que** le composant fait partie d'un variateur axial.
